# EUROPEAN PATENT APPLICATION

(11) **EP 1 672 888 A1**
(43) Date of publication of application: **21.06.2006**
(21) Application number: 05027413.3
(22) Date of filing: 14.12.2005
(51) Int. Cl.: H04M 1/60

(54) **Accessory with speaker module for portable wireless terminal**

(30) Priority: 14.12.2004 KR 2004105665
(71) Applicant: Samsung Electronics Co., Ltd., Suwon-si, Gyeonggi-Do (KR)
(72) Inventor: Shin, Jong-Kyun, Bundang-gu Sungnam-si Gyeonggi-do (KR)
(74) Representative: Grünecker, Kinkeldey, Stockmair & Schwanhäusser Anwaltssozietät

(57) **Abstract**

Disclosed is an accessory for a portable wireless terminal. In the accessory, a locking unit is connected to the portable wireless terminal with a string for being jointly carried with the portable wireless terminal, and a speaker module is detachably attached to the locking unit. The speaker module is detached from the locking unit and inserted to an ear jack of the portable wireless terminal to use an external speaker. Since the speaker module is attachable to the accessory connected to the portable wireless terminal, the speaker module can be jointly carried with the portable wireless terminal when it is not used.

## Description

### BACKGROUND OF THE INVENTION

### 1. Field of the Invention

The present invention relates to an accessory for a portable wireless terminal, and more particularly, to an accessory with a speaker module for a portable wireless terminal, in which the speaker module can be detached from the accessory and connected to the portable wireless terminal as an external speaker device.

### 2. Discussion of the Related Art

Portable wireless terminals are becoming common, and the manufacturers are trying to make a slim, lightweight, and compact wireless terminal with various functions to satisfy users' demand. Particularly, manufacturers are trying to reduce the size of the portable wireless terminal without decreasing the performance of essential parts such as a display, a speaker, and a microphone.

A portable wireless terminal is provided with a speakerphone unit having a loudspeaker for the user to hear sound without the user needing to place the portable wireless terminal near the ear. That is, the speakerphone unit provides a hand-free function. For example, when driving a car, the user can hear a caller's voice from the speakerphone unit without picking up the portable wireless terminal from a dashboard-mounted holder.

Also, the use of an external speaker module is becoming common. The external speaker module is connected to the portable wireless terminal when a user wants to use it. For example, the external speaker module can be connected to the portable wireless terminal by inserting a plug of the external speaker module into an ear jack on a side of the portable wireless terminal or an interface connector on a bottom of the portable wireless terminal.

However, it is inconvenient for the user to keep the external speaker module in a separate place from the portable wireless terminal, such as a pocket and a bag. Also, the external speaker module is easily lost or damaged when it is separately kept, such that the user cannot use the external speaker module when it is really required.

### SUMMARY OF THE INVENTION

The present invention provides an accessory with a speaker module for a portable wireless terminal, the speaker module being jointly carried with the portable wireless terminal when it not used.

Also, the present invention provides an accessory with a speaker module for a portable wireless terminal, the speaker module being jointly carried with the portable wireless terminal when it is not used to prevent the loss and damage of the speaker module.

Further, the present invention provides an accessory with a speaker module for a portable wireless terminal, the speaker module being jointly carried with the portable wireless terminal to immediately make electrical connection with the portable wireless terminal when a user intends to use the speaker module.

According to an aspect of the present invention, there is provided an accessory with a speaker module for a portable wireless terminal, the accessory including a locking unit connected to the portable wireless terminal with a string for being jointly carried with the portable wireless terminal; and a speaker module detachably attached to the locking unit, the speaker module being detached from the locking unit and being inserted to an ear jack of the portable wireless terminal to use as an external speaker.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG 1 is a perspective view of a portable wireless terminal provided with an accessory according to the present invention;

FIG 2 is a perspective view of a portable wireless terminal in which a speaker module is detached from an accessory and connected to the portable wireless terminal according to the present invention;

FIG 3 is a perspective view of a locking unit of an accessory according to the present invention;

FIG 4 is a perspective view of a speaker module of an accessory according to the present invention;

FIG 5 is a side sectional view showing a speaker module detached from a locking unit according to the present invention; and

FIG 6 is a side sectional view showing a speaker module coupled with a locking unit according to the present invention.

### DETAILED DESCRIPTION OF THE PREFERRED EMBODIMENTS

Reference will now be made in detail to the preferred embodiments of the present invention, examples of which are illustrated in the accompanying drawings. A detail description of well-known features will be omitted for conciseness.

A slide type terminal and an accessory suitable for the slide type terminal are illustrated to describe the present invention. However, the present invention is not limited to the illustrated terminal. The present invention can be applied to various kinds of terminals such as a folder type terminal, a flip type terminal, a bar type terminal, a Personal Digital Assistant (PDA), etc. that are capable of using an external speaker module.

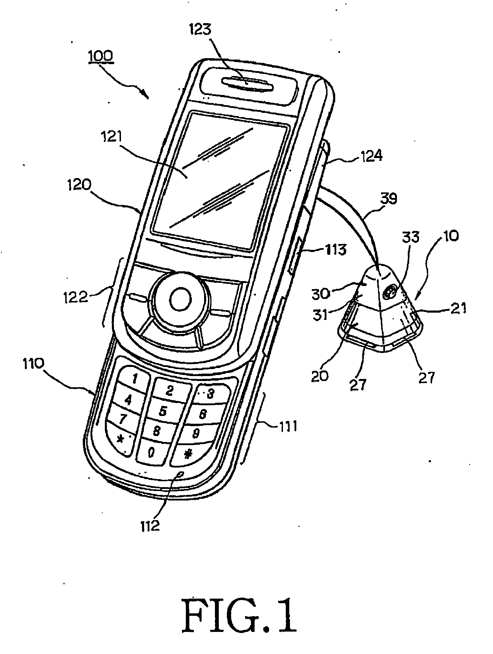

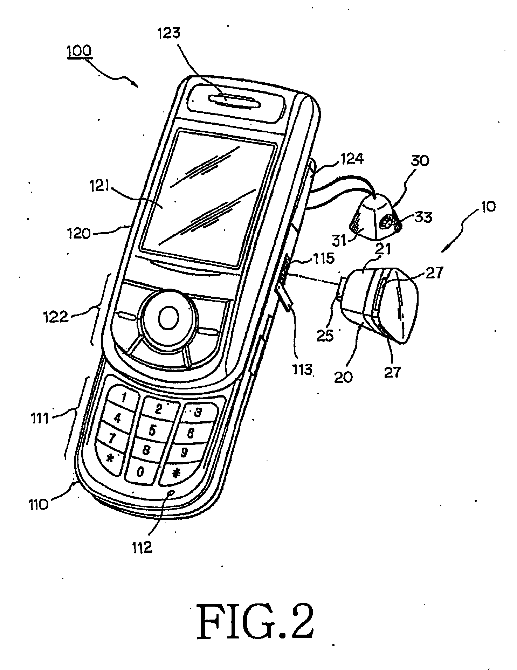

Referring to FIGs. 1 and 2, a portable wireless terminal 100 includes a main body 110 and a slide body 120 capable of sliding on the main body 110 in a length direction of the terminal 100 for opening and closing operations.
The slide body 120 may include a display 121 at a front, a first keypad assembly 122 under the display 121, and an earpiece 123 with a speaker above the display 121. The first keypad assembly 122 may be navigation buttons.

The main body 110 includes an antenna 124, which may include a built-in antenna, a whip antenna or a helical antenna. Also, the main body 110 includes a second keypad assembly 111 on a front lower portion. The second keypad assembly 111 is exposed when the slide terminal is opened. The second keypad assembly 111 may be a 3 x 4 keypad assembly. Further, the main body 110 includes a microphone 112 under the second keypad assembly to receive user's voice.

An accessory 10 is connected to the portable wireless terminal 100 in any known manner, such as a string 39. As is well known to those of skill in the related art, the portable wireless terminal 100 is formed with a portion (not shown) shaped like a ring to which various kinds of accessories can be fastened. For example, one end of a string is tied to the ring shaped portion and the other end of the string is tied to an accessory, such that the accessory can be carried together with the portable wireless terminal.

In this embodiment, the accessory 10 having a pyramid-like shape is connected to the portable wireless terminal 100 with the string 39. The shape of the accessory 10 is not limited to the illustrated pyramid shape. When buttons 33 (only one of which is shown in FIGs. 1 and 2) are pressed, the lower portion of the accessory 10 is separated. The lower portion of the accessory 10 is constructed as a speaker module 20. When separated from the accessory 10, the speaker module 20 is connected to the portable wireless terminal 100 through an ear jack 115 as an external speaker module. The upper portion of the accessory 10 is constructed as a locking unit 30 for holding and releasing the speaker module 20.

When not used, the speaker module 20 is attached to the locking unit 30 and carried together with the portable wireless terminal 100 as an accessory. To use the speaker module 20, a user can detach it from the locking unit 30 by depressing the buttons 33 formed on opposing sides of the locking unit 30, and then the user can electrically connect the speaker module 20 to the portable wireless terminal 100. For the electrical connection with the portable wireless terminal 100, the speaker module 20 is formed with a protruding connector 25 on the surface facing the locking unit 30. The connector 25 is inserted into the ear jack 115 defined on a side of the portable wireless terminal 100 to electrically connect the speaker module 20 to the portable wireless terminal 100. The ear jack 115 may be covered with a cover 113. The user can pull and turn the cover 113 to open the ear jack 115. The connector 25 may be a 10-pin connector.

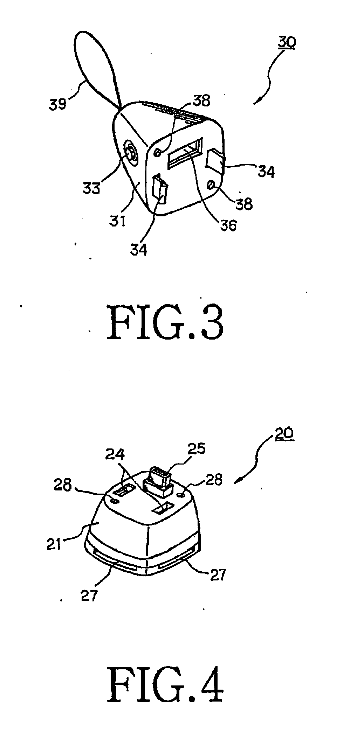

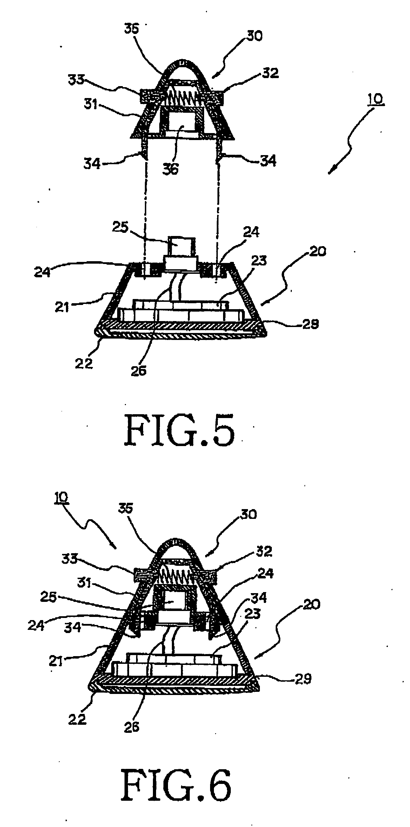

Referring now to FIG 3, the locking unit 30 includes a case frame 31, the string 39 at a top of the case frame 31 for connection with the portable wireless terminal, and two connecting ribs 34 protruding from a bottom of the case frame 31. Free ends of the connecting ribs 34 are respectively shaped like hooks. Also, the locking unit 30 includes the buttons 33 formed on both sides of the case frame 31. When buttons 33 are depressed inwardly, the connecting ribs 34 move inwardly. The buttons 33 and the connecting ribs 34 may be formed in one piece as a locker (as shown at to 32 in FIG 5). The locker 32 will be described later in detail.

When the speaker module 20 is attached to the locking unit 30, the case frame 31 makes contact with the speaker module 20 at its bottom while receiving the connector 25 of the speaker module 20. To receive the connector 25, the case frame 31 is provided with an insertion hole 36 at its bottom. Also, the case frame 31 is preferably formed with protrusions 38 that are spaced apart from each other. The protrusions 38 are fitted into recesses (as shown at 28 in FIG 4) provided at a top of the speaker module 20 for an exact attachment of the speaker module 20 to the locking unit 30.

Referring to FIG 4, the speaker module 20 includes a baffle box 21 and the connector 25 protruding from a top of the baffle box 21. For operation of the speaker module 20 as an external speaker module of the portable wireless terminal 100, the connector 25 is inserted into the ear jack 115 to make an electrical connection between the speaker module 20 and the portable wireless terminal 100. The baffle box 21 defines hook holes 24 at a top to receive the connecting ribs 34 of the locking unit 30. When the connecting ribs 34 of the locking unit 30 are inserted in the hook holes 24, the hook-shaped ends of the connecting ribs 34 are held by the wall of the hook holes 24. Also, the baffle box 21 defines the recesses 28 corresponding to the protrusions 38 of the locking unit 30. In addition, the speaker module 20 is provided with at least one sound hole 27 under the baffle box 21.

Referring now to FIGs. 5 and 6, the locking unit 30 includes the locker 32 in the case frame 31. The locker 32 includes the connecting ribs 34 at both ends and the buttons 33 at both sides, and it is made of an elastic material with an inverted U-shaped section. The buttons 33 protrude outwardly through the case frame 31 and return to their initial positions when depressing force is removed, owing to the elasticity and inverted U-shape of the locker 32. Also, to prevent the restoring force of the locker 32 from reducing according to the time of use, a compression coil spring 35 may be disposed between the buttons 33. That is, the compression coil spring 35 urges the connecting ribs 34 outwardly. Further, the case frame 31 defines the insertion hole 36 at its bottom to receive the connector 25 protruding from the top of the speaker module 20.

The speaker module 20 includes a speaker 23 in the baffle box 21. The speaker 23 is fixed in the baffle box 21 by a hollow spacer 29 mounted on a bottom of the baffle box 21. A base plate 22 in which the sound hole 27 is defined is fixed under the spacer 29. The baffle box 21, the spacer 29, and the base plate 22 may be made of synthetic material and may be assembled using a well known method such as hot melt adhesion and ultrasonic welding. The speaker 23 is electrically connected to the connector 25 with a cable 26. Also, the baffle box 21 defines the hook holes 24 at the top to receive and hold the hook-shaped ends of the connecting ribs 34 of the locker 32.

When the speaker module 20 is not used, a user can attach the speaker module 20 to the locking unit 30 connected to the portable wireless terminal 100 with the string 39. Therefore, the speaker module 20 can be carried together with the portable wireless terminal 100 as an accessory. That is, the speaker module 20 can be attached to the locking unit 30 as shown in FIG 6, and it can be jointly carried with the portable wireless terminal 100 as an accessory as shown in FIG 1.

When the user intends to use the speaker module 20 as an external speaker module of the portable wireless terminal 100, the user can detach the speaker module 20 from the locking unit 30 by depressing the buttons 33 and pulling down the speaker module 20. After the speaker module 20 is detached from the locking unit 30 as shown in FIG 5, the user can operate the speaker module 20 by connecting it to the portable wireless terminal 100 through the ear jack 115 as shown in FIG 2.

According to the present invention, the speaker module is attachable to the accessory connected to the portable wireless terminal, such that the speaker module can be jointly carried with the portable wireless terminal when it is not used. Therefore, the speaker module can be conveniently carried without the risk of losing it. Also, the speaker module, as an accessory, can make the appearance of the portable wireless terminal more attractive.

The foregoing embodiments are merely exemplary and are not to be construed as limiting the present invention. The description of the present invention is intended to be illustrative, and not to limit the scope of the claims. Many alternatives, modifications, and variations will be apparent to those skilled in the art.

## Claims

1. An accessory (10) with a speaker module (20) for a portable wireless terminal (100), comprising:
a locking unit (30) connected to the portable wireless terminal (100) for being jointly carried with the portable wireless terminal; and
said speaker module (20) detachably attached to the locking unit (30), the speaker module being connectable to an ear jack (115) of the portable wireless terminal for use as an external speaker.

2. The accessory of claim 1, wherein the locking unit (30) includes:
a case frame (31); and
a locker (32) installed in the case frame (31) and having a portion (34) protruding from the case frame, the protruding portion being selectively held by a wall surrounding a hook hole (24) defined in the speaker module (20).

3. The accessory of claim 2, wherein the locker (30) has an inverted U-shape and includes:
connecting ribs (34) formed at both ends with hook shapes, as said protruding portion the connecting ribs protruding downwardly through the case frame (31); and
buttons (33) formed at both sides and protruding outwardly through the case frame, the buttons being selectively pressed for manipulation of the locker (30).

4. The accessory of claim 3, wherein the locker (30) is provided with a spring (35) disposed therein to urge the ribs (34) of the locker outwardly toward an initial position.

5. The accessory of one of the preceding claims, wherein the speaker module (20) includes:
a baffle box (21) defining an inner space;
a speaker (23) installed in the baffle box;
a connector (25) electrically connected to the speaker (23) and installed to partially protrude from a top of the baffle box (21) for insertion into the ear jack (113) of the portable wireless terminal (100);
a hollow spacer (29) at a bottom of the baffle box (21) to support the speaker (23); and
a base plate (22) installed under the spacer (29) to form an outside of the speaker module (20), the base plate defining at least one sound hole (27) to transfer sound from the speaker to the outside.

6. The accessory of claim 5, wherein the locking unit (30) couples an insertion hole (36) in a surface facing the speaker module (20) to receive the connector (25) of the speaker module when the speaker module is attached to the locking unit.

7. The accessory of claim 5, wherein the baffle box (21), the spacer (29), and the base plate (22) are assembled through one of an ultrasonic welding process and a hot melt adhesion process.

8. The accessory of one of the previous claims, wherein at least two protrusions (38) or recesses (28) are formed at the case frame (38) to be fitted into recesses (28) or protrusions (38), respectively, provided at a top of the speaker module (20).

9. The accessory of one of the previous claims, wherein it has a pyramid-like shape.

10. The accessory of one of the previous claims, wherein it comprises a string (39) for connecting to the portable wireless terminal (100) to be carried together with same.
